Europäisches Patentamt

(19) European Patent Office

Office européen des brevets

(11) Publication number: **0 456 441 A1**

(12) **EUROPEAN PATENT APPLICATION**

(21) Application number: **91304071.3**

(22) Date of filing: **07.05.91**

(51) Int. Cl.$^5$: **B22F 1/00, B22F 3/10, C04B 35/00**

(30) Priority: **07.05.90 US 520076**

(43) Date of publication of application:
**13.11.91 Bulletin 91/46**

(84) Designated Contracting States:
**CH DE FR GB LI NL SE**

(71) Applicant: **Chung, C.I.**
**c/o Rensselaer Polytechnic Institue**
**Troy, New York 12180-3590 (US)**
Applicant: **Cao, M.Y., Dr.**
**c/o Rensselaer Polytechnic Institue**
**Troy, New York 12180-3590 (US)**

(72) Inventor: **Chung, C.I.**
**c/o Rensselaer Polytechnic Institue**
**Troy, New York 12180-3590 (US)**
Inventor: **Cao, M.Y., Dr.**
**c/o Rensselaer Polytechnic Institue**
**Troy, New York 12180-3590 (US)**

(74) Representative: **Rees, David Christopher et al**
**Kilburn & Strode 30 John Street**
**London WC1N 2DD (GB)**

(54) **Solid polymer solution binders for sinter-processing of metal or ceramic powders.**

(57)    A new class of binders is provided for admixture with metallic or ceramic powders for sintering into shaped objects of uniform density by utilizing injection molding, extrusion, or other mechanical shaping techniques. The novel binders are solid polymer solutions containing a major fraction of a low molecular weight solid chemical as solvent and a minor fraction of at least one high molecular weight solid polymer as solute substantially dissolved there-in. The solid polymer solution binders when molten can be uniformly mixed with known metallic or ceramic powders into a readily flowable mixture which when solidified, can retain a given shape. Then, the binder can be eliminated by an advantageous two-stage "debinding" procedure involving selective extraction of the solid chemical while the solid chemical stays rigid and the polymer fraction undisturbed, e.g. by solvent leaching or sublimation, followed by thermal removal of the polymer to obtain a shaped part ready for sintering. A coupling agent, a plasticizer or other additive may be included.

EP 0 456 441 A1

This invention relates to the field of powder particle processing by sintering into shaped solid parts, including the powder injection molding (PIM) process, and is concerned, more particularly, with an improved temporary, removable binder for holding powder particles as a shaped form prior to further processing and eventual sintering.

In the conventional powder particle processing sometimes referred to as "press and sinter", metal or ceramic powders are compacted under a very high pressure into bodies or parts having a desired shape and the compacted body is sintered in a furnace to yield the solid shaped product. An inherent problem in this process arises from the fact that the force of the applied pressure experienced by the compacted body decreases rapidly interiorly below its surface due to the friction between the powder particles. Therefore, the density of the compact varies from its surface to its center, resulting in non-uniform shrinkage of the compact upon sintering. Complex shapes are therefore difficult to make by conventional powder particle process because of the non-uniform changes in shape caused by such non-uniform shrinkage during sintering.

The PIM process has become an important new technology in recent years in the sinter-processing of metal and ceramic powders into solid parts. The PIM process combines the plastics injection molding technology for forming desired shapes and the conventional powder particle technology for sintering the molded parts into solid bodies. In the PIM process, the powder is mixed with a binder which forms the essential difference between the PIM process and the conventional powder process. The binder is solid at room temperature but becomes fluid upon heating. Therefore, the mixture behaves as a solid at room temperature but as a fluid upon heating. The mixture, while in heated fluid condition, can be easily molded into desired shapes using plastics-type injection molding equipment instead of by compacting the solid powder particles. The solid molded "green parts" have a uniform density throughout due to the fluid behavior of the mixture under heat and pressure. The binder is then removed or "debound" from the green part and the debound green part is sintered in a furnace to obtain the final product. The principal advantage of the PIM process is the ability to mold complex parts with a uniform density. These parts, after debinding and sintering, become the final products requiring little or no additional finishing. The disadvantages of the PIM process are difficult mixing and debinding operations.

The binder plays the key role and largely controls the success of the PIM process. A good binder must possess a number of required characteristics: a very low viscosity for mixing with extremely fine powder particles, reasonable mechanical properties for adequate green strength, good adhesion to the powder particle surface for easy mixing and good green strength, thermal or chemical properties necessary for easy debinding, ability to hold a given shape without distortion during molding, debinding and sintering, and absence of any significant adverse effects on the final product properties as well as those related to economic and health concerns. Such a combination of characteristics is usually obtained by formulating several binder components to form a multi-component binder such as the common wax-based binders disclosed by M.A. Strivens in U.S. Patent 2,939,199 issued on June 7, 1960.

The metallic or ceramic powders used in the PIM process have particle sizes in the order of microns for good sintering behavior. A high powder volume fraction in the range of 40-70% by vol., usually 60-70% by vol., of the part is desired to achieve good properties in the sintered products. Such a high powder volume fraction close to the maximum possible packing fraction, coupled with extremely small particle sizes, makes the tasks of mixing and debinding of the binder profoundly difficult. Mixing is accomplished by brute force, usually using a sigma-blade or banbury batch mixer running for many hours. Although such mixing operations are expensive, they cause no damage to the mixture as long as the mixture is thermo-mechanically stable at the mixing conditions. Debinding is not only difficult but also often causes undesirable distortion of the part shape, rendering it useless. For example, green parts made of wax-based binders must be heated above the melting point of the wax for debinding by any technique whether it be pyrolysis, wicking or solvent leaching. Thus, the green parts become soft and slump during debinding. This problem severely limits the utility of wax-based binders only to small simple parts. The binder must remain rigid or otherwise be able to support the weight of the part during debinding in order to avoid distortion of its shape.

The above discussion of the problem of shape distortion during the debinding stage is equally applicable to all binder-assisted processing of metal powders and ceramic powders by injection molding or extrusion, etc. An important contribution in the powder processing technology will be a binder system which can be easily debound from the molded or extruded parts without causing appreciable distortion of the part shapes. Development of binders had been largely empirical as evidenced by the patent literature.

As mentioned above, US Patent 2939199 teaches composite binder compositions made of wax, thermoplastic and thermosetting resins. US Patent 4197118 and 4415528 disclose binder compositions formed of wax and polyethylene resin. In the former, extraction of the binder by a solvent in the vapour phase is an important feature while the latter emphasises special sintering conditions.

A main object of this invention is to provide a novel binder system which can be debound from shaped green parts without causing any appreciable distortion of such parts. Another object of this invention is to provide an easy convenient method of debinding a temporary binder from a shaped part, with the shaped part being able to retain its shape throughout the debinding and sintering operations.

According to the invention, there is provided a binder for the sintering-processing of metallic or ceramic powder particles into shaped solid articles or parts, characterised in that it comprises a substantially homogeneous solid solution of a minor fraction of at least one high molecular weight polymer as solute in a major fraction of a low molecular weight solid chemical as solvent, the polymer and solvent essentially mutually soluble when molten and solidifying when cooled from the molten state without substantial phase separation; the low molecular weight chemical showing selective solvent-solubility towards the polymer at a temperature below its own softening point or the softening point of the polymer, and/or the low molecular weight chemical having the capacity to undergo sublimation at a temperature below its own softening point or the softening point of the polymer.

Preferably the polymer constitutes about 5-35% by wt. of the combined weight of the polymer and low molecular weight chemical, but preferably not so great an amount as to render the viscosity of the mixture unsuitably high for generally uniform mechanical mixing with the said powder particles.

In a preferred form of the invention, a selected low molecular weight crystalline chemical acts as a solvent for a specific polymer at elevated temperatures above its melting point which may also be above the melting point of the polymer to facilitate its dissolution. This solution of the polymer in the chemical becomes a solid upon cooling below the recrystallization temperature of the chemical, and the resultant solid can be descriptively called a "solid polymer solution" (SPS). A SPS is made of a major fraction of a solid chemical with a low melting point and a minor fraction of at least one high molecular weight polymer. The chemical melts and dissolves the polymer upon heating, and the solution becomes a mechanically strong homogeneous solid upon cooling. A SPS offers great potential as a binder in powder metallurgy and the like. It has a very low viscosity when molten, due to the extremely low viscosity of the chemical solvent phase, and also a good green strength when solid due to the contribution of the polymer solute phase. It is homogeneous and thus it will not introduce any defects in the final sintered parts due to localized variations in the binder composition. The viscosity and green strength of a SPS can be easily controlled by adjusting the polymer content. As the polymer content increases, the green strength increases but the viscosity also increases. The most desirable feature of a SPS as a binder is the ability to undergo selective debinding of the chemical solvent component from the molded part by relatively simple techniques, including extraction or leaching with a common solvent liquid (including water), which are effective at a low temperature below the melting point of the chemical, as well as of the polymer, or by sublimation at a similarly low temperature, leaving in either case the polymer component intact in the molded part. Since the solid chemical is below its softening temperature while undergoing its removal, it does not soften and slump during this stage but remains rigid until eliminated. Consequently, the molded part stays rigid during debinding, retaining the desired part shape without any appreciable distortion. The polymer component remains in the molded part after debinding the chemical component and serves to retain the shape of the molded part until it is removed, preferably by thermal debinding in a furnace at high temperatures during pre-sintering of the powder particles.

The choice of suitable low molecular solid chemical solvents is, in principle, almost unlimited. Generally, the solvent will be organic in nature; inorganic chemicals are not necessarily excluded but are unlikely to prove useful in practice. Similarly, the chemical as solvent will generally be crystalline at least in its normal state. Some of the suitable chemicals may be amorphous when "super-cooled", i.e. rapidly quenched well below their solidification temperature, but will revert to their normal crystalline state when returned to room temperature. Non-crystalline materials at RT are not in principle inoperative for that reason alone but suitable examples will rarely be found in practice. The essential criterion for the chemical is mutual solubility with the polymer when in the fused state which is most likely to occur when the chemical structure of the solid solvent and polymer solute are somewhat generally related. For example, a chemical solvent of aromatic structure is usually felicitous in terms of mutual solubility, at least for polymer solutes which likewise include aromatic structures.

The identification of effective combinations of crystalline solid solvent and polymer solute can be carried out by simple screening tests involving heating the two together until molten and observing whether or not they will mix together essentially homogeneously when agitated or undergo a definite phase separation either directly or when allowed to cool to room temperature. More precise detection of an undesirable solid polymer phase can be made by heat capacity measurement which distinctly reflects the effect of the latent heat of fusion/solidification of the polymer component and thus reveals the creation of separated solid polymer.

It will be understood that perfect homogeneity is not a prerequisite in the SPS provided there is not large scale separation. Thus, the polymer can be present as very fine particles, i.e. with micro-scale separation, so long as such micro-particles are smaller in size than the metallic or ceramic powder particles. Obviously, there is only a fine line of distinction at best between true molecular homogeneity and micro-scale homogeneity which need not be drawn here.

Any polymer satisfying the solubility requirements and otherwise useful as a powder particle binder, e.g. sufficient coherency for adequate temporary mechanical strength, ability to undergo volatilization or combustion during the sintering or pre-sintering beat-treatment without adverse consequences on the remaining body of powder particles, etc. will be useful in this invention. Polystyrene and polyethylene vinyl acetate are especially suitable, and polyvinyl alcohol and block copolymers containing substantial blocks of polystyrene would also be useful, to name a few.

The solid solvent component should make up the major fraction of the SPS while the polymer solute is the minor fraction. The exact limits of such fractions for a particular combination will usually depend on practical considerations such as the resultant viscosity since that property increases with increasing concentration of polymer, which influences difficulty of mixing with the powder particles. The upper limit for the minor polymer fraction will probably never exceed about 40% by wt., and in practice will generally be lower, say around 20-30% by wt. The lower limit for the polymer is about 5% by wt. but will usually be higher, say about 10-15% by wt. The inclusion of a coupling agent, a viscosity-adjusting agent, a plasticizing agent, or other additives may affect these limits either upwardly or downwardly as the case may be.

The relative proportions of SPS to powder particles is best determined volumetrically since the particles may be of much greater density, especially when metallic. Generally, the volume of the powder particles should be as high as possible, preferably approaching maximum packing density, since only such particles remain in the final product and for the usual purposes, the experience of the art with previous binders in regard to relative proportions are applicable here. Thus, the binder by vol. might constitute as much as about 60% by volume of the binder-powder mixture, but more typically about 30-40% and perhaps a minimum of 20-25%.

The solid chemical component can be removed from the shaped green part by an convenient technique that does not disturb the essential dimensional stability of that part. dissolution in a fluid, e.g. liquid, solvent therefore, preferably having high solvent action for the solid chemical component at room temperature, is a desirable approach but sublimation for those chemicals having this behavior is a useful alternative. Mild heating to promote or accelerate the extraction or leaching as well as the sublimation is permissible but temperatures approaching the softening temperature range of the particular solid chemical and polymer should obviously be avoided to prevent any possibility of weakening the structural integrity of the part while the solid chemical component is being removed. Any extraction solvent that is effective to dissolve the solid chemical component without attacking the polymer or powder particles or leaving a significant residue may be used.

In addition to individual polymers, use may be made of blends of two or more polymers which are compatible with one another and have substantial solubility in the solid chemical. The same holds true, in reverse, for mixtures of solid chemicals.

After removal of the solid chemical, the polymer component remains as a porous matrix for the powder particles that exhibits a desirable uniformity and structured coherency throughout due to the essential homogeneity of the solid chemical and polymer components in the SPS. The presence of such pores is an advantage during subsequent debinding or elimination of the polymer component. Debinding is typically achieved by a heat treatment to decompose or combust the polymer and the existence of pores not only facilitates rapid heat transfer within the interior of the part but the free escape of gaseous decomposition products without disturbing the part shape. The polymer can thus burn rapidly and escape easily without problems.

## Examples of the Invention

An example of a preferred SPS binder is polystyrene (PS) dissolved in acetanilide (AC). Other examples include PS dissolved in dephenyl sulfone (DPS), diphenyl carbonate (DPC), antipyrine (ANP), rosin, or naphthalene (NAP). Several (AC+PS) binders with varying PS content from 5 to 30% to the total weight of PS and AC were made by mixing AC and PS at 150°C for about 3 hours until PS completely dissolved in AC, and were tested as binders for a carbonyl iron powder. Stearic acid (SA) was coated on the powder as a coupling agent to promote adhesion between the powder and the binder. 10 wt.% SA to the (AC+PC) binder weight was used. A commercial PS with a weight average molecular weight of about 312,000 and the glass transition temperature of 105°C was used. The AC sample bad 97% purity with its melting point at 115°C. The reagent grade SA sample had the melting point at 75°C. The carbonyl iron powder was in the form of spherical particles with a nominal diameter of 5 micron. The powder loading was 62 vol.% or 93 wt.% in all mixtures.

The (AC+PS) binders were mechanically mixed uniformly with the SA coated iron powder using a simple impeller-type mixer at about 130°C. The mixtures were molded into rectangular bars of 12.7 mm wide by 6.35 mm thick by 50.8 mm long using a small, manual injection molder at 130°C. Evaluation of the (AC+PS) binders and their mixtures by measuring viscosity and bending strength of the molded bars showed that 20% PS content in the binder gave the optimum properties. A complete study of mixing, molding, debinding and sintering was made using the (80% AC + 20% PS) binder. The molded bars were debound by leaching out AC with ethanol at RT, and the debound bars were sintered at the heating rate of 10°C per min. up to about 1200°C to produce perfectly shaped bars without any distortion. Addition of 5% peanut oil as a plasticizing agent into the binder improved the molding characteristics of the mixture. In order to reduce the brittleness of the binder, 10% polyethylene vinyl acetate (EVA) + 10% PS was also used as the polymer component instead of 20% PS. EVA is soft and ductile, while PS is hard and brittle. The EVA sample was a commercial polymer with 27.5% by wt. vinyl acetate content. The (80% AC + 20% PS) binder was successfully used with other powders including stainless steel, alumina and silicon carbide as well as with whiskers.

DPC, DPS, ANP and NAP as solid solvents for PS when substituted for AC, also tested successfully with the carbonyl iron powder in other complete studies, ANP is water soluble, and thus it could be debound using water. NAP has a high vapor pressure at room temperature, and thus it could be debound by sublimation in a vacuum oven at about 50°C.

The viscosities of several examples of SPS binders were measured using a concentric cylinder rotational viscometer, while those of the mixtures with powder were measured using a capillary rheometer. It is noted that the SPS binders alone had too low viscosities to be measured by a capillary rheometer. The capillary bad 0.127 cm (0.05 in) diameter by 5.08 cm (1 in) length with 90 degree entry angle. For a controlled debinding study, circular disks of about 1 cm diameter and 0.8 cm thickness were molded from the mixtures and the disks were immersed in an appropriate solvent for various durations to leach out the chemical component. Ethanol at 20°C and also at 50°C was used for AC. After leaching out AC, the disks were dried in a vacuum oven at 70°C for about 1 hour and the weight were measured to determine the extent of rebound AC. Alternatively, AC could be debound by sublimation in a vacuum oven at 50°C for about 1 day. Methanol, acetonitrile and their mixtures at room temperature were used to leach out DPS and DPC. Water was used to leach out ANP.

The thermal debinding characteristics of the individual components of the binders, the SPS binders themselves and their mixtures with powder were studied using a thermogravimetric analyzer (TGA) under nitrogen purge gas at 20°C/min. heating rate. The bending strength of the molded bars at RT, which is treated as the green strength in this study, i.e. before sintering, was measured according to a three point bending method using a MTS tensile tester. The support roll diameter was 3.175 mm, the span length was 31.75 mm, and the cross head speed was 1.5 mm/min.

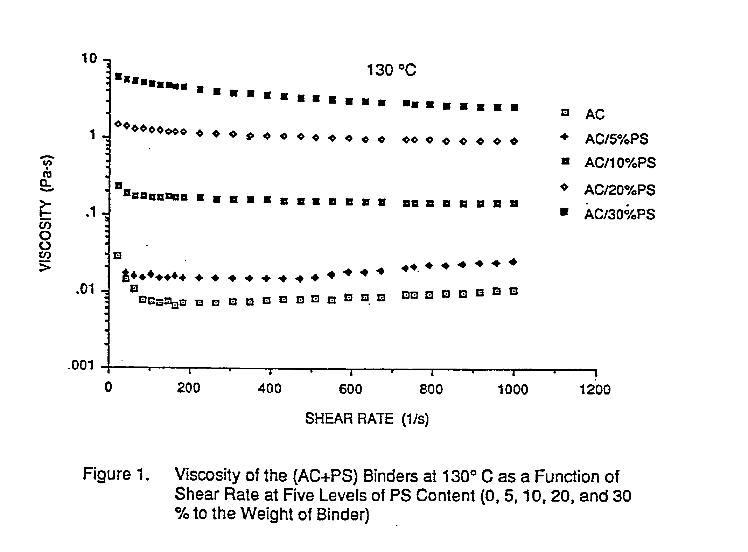

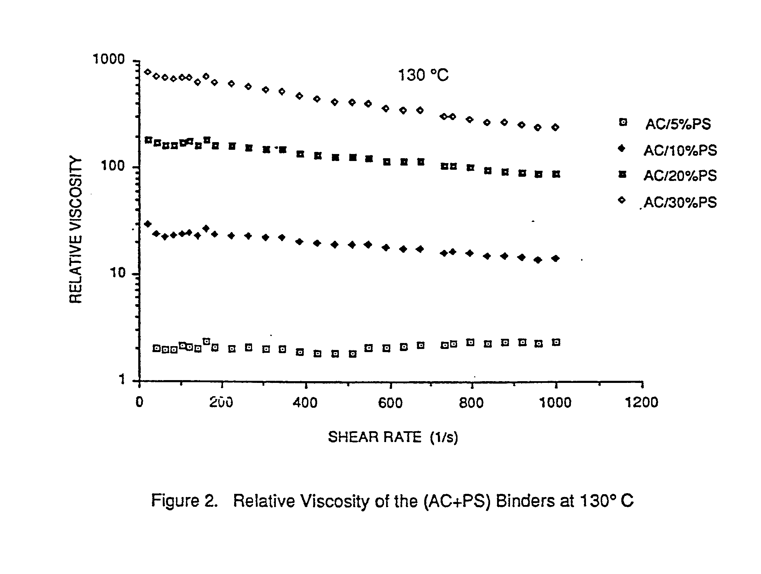

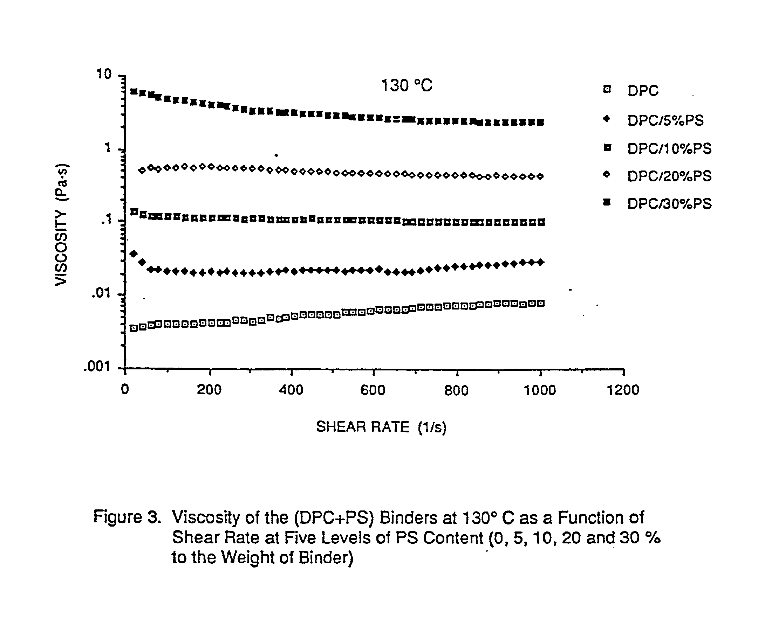

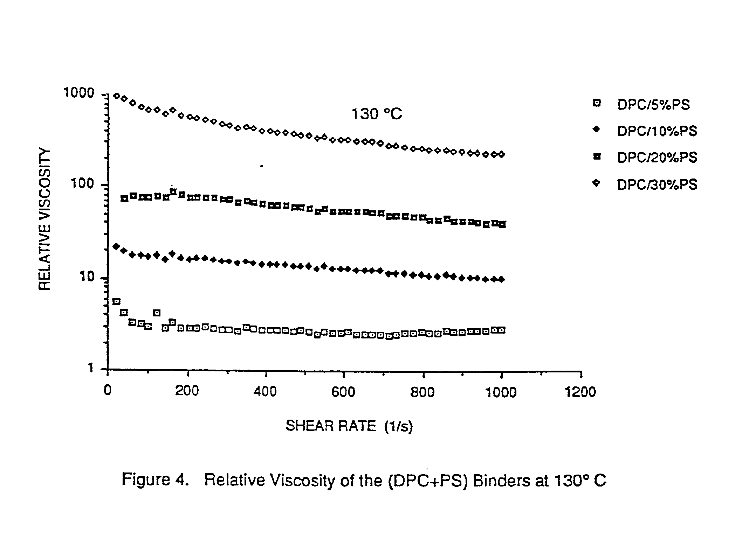

The viscosities of the (AC+PS) binders measured at 130°C are shown in Figure 1 as a function of shear rate at five levels of PS content (0, 5, 10, 20 and 30% by weight in the binder). The relative viscosities of the (AC+PS) SPS binders calculated from Figure 1 are shown in Figure 2. Relative viscosity is defined as the ratio of the solution viscosity to the solvent viscosity. The corresponding results obtained for the (DPC+PS) binders are shown in Figures 3 and 4. The viscosities of these SPS binders increase as the polymer content increases as would be expected of polymer solutions. These SPS binders exbibit Newtonian behavior at low polymer contents but pseudo-plastic behavior at high polymer contents above 10%. Figure 5 compares the viscosities of three different SPS binders, (AC+PS), (DPC+PS) and (DPS+PS), all with a constant PS content of 20% at 130°C. The viscosity of a particular polymer solution depends on the interaction between the solvent and the polymer as well as the solvent viscosity and the polymer concentration. DPS and AC appear to be better solvents with greater solvating power for PS than DPC.

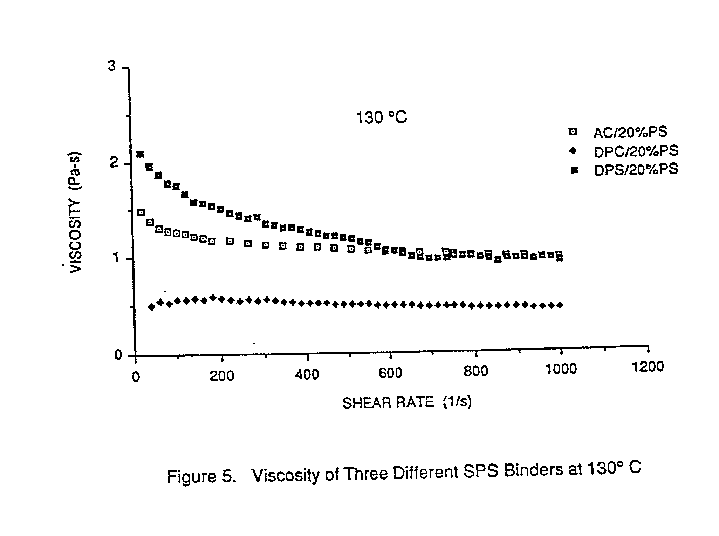

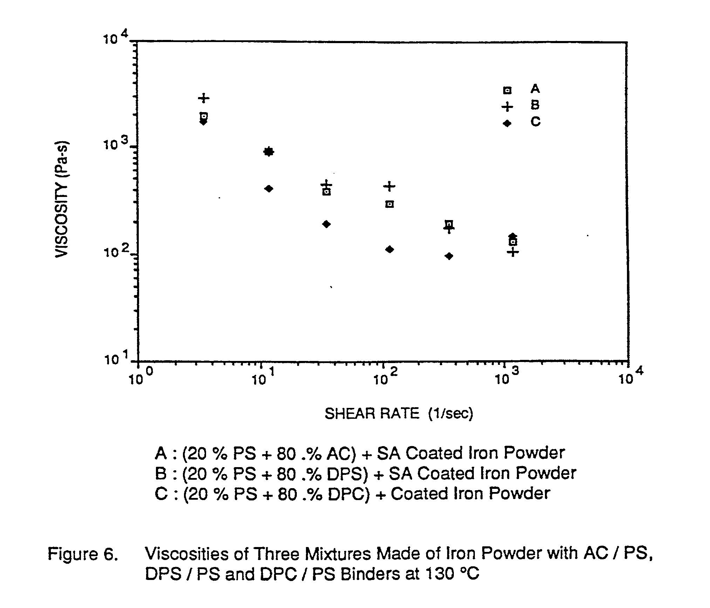

Although the (AC+PS) binder with 20% PS bad a low viscosity comparable to the common wax based binders, it was difficult to mix with the powder and the resultant mixture bad a high viscosity. Such unexpected behavior is probably attributable to poor adhesion of AC on iron surface. Addition of SA indeed reduced the mixture viscosity to a reasonable level. However, the effect of SA as a coupling agent was found to greatly depend on the method of adding SA into the mixture. SA was most effective when it was coated on the powder in solution. Mixing SA in the binder together with other binder components was ineffective. In order to simplify the coating operation, SA was directly mixed into the heated powder to coat the powder, and then the coated powder was mixed with the SPS binder to obtain the mixture. Three mixture with a constant powder loading of 62 vol. % were made using the three different SPS binders shown in Figure 5. The viscosities of these three mixtures at 130°C are shown in Figure 6. The (DPC+PS) binder gives the lowest binder and mixture viscosities. The (DPS+PS) binder and the (AC+PS) binder have a similar viscosity, and they also give a similar mixture viscosity. the mixture viscosity can be predicted by a simple relationship as a function of the binder viscosity and the powder volume fraction.

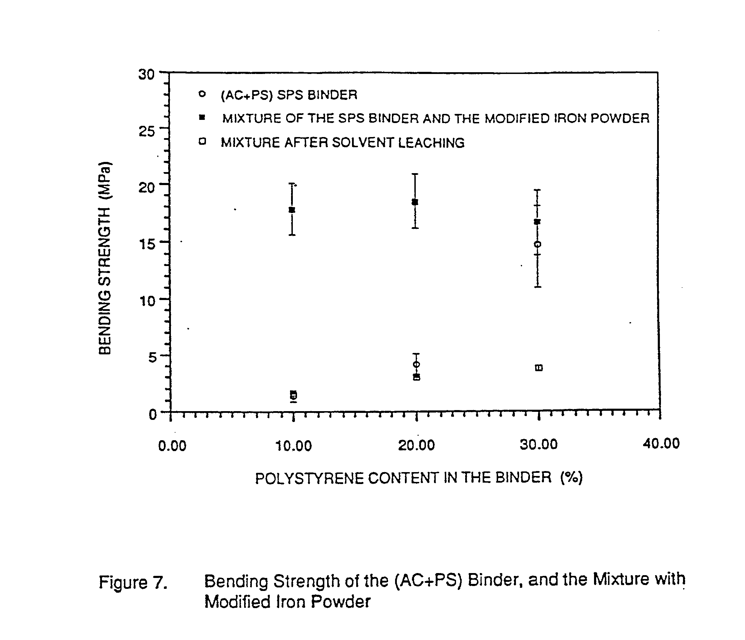

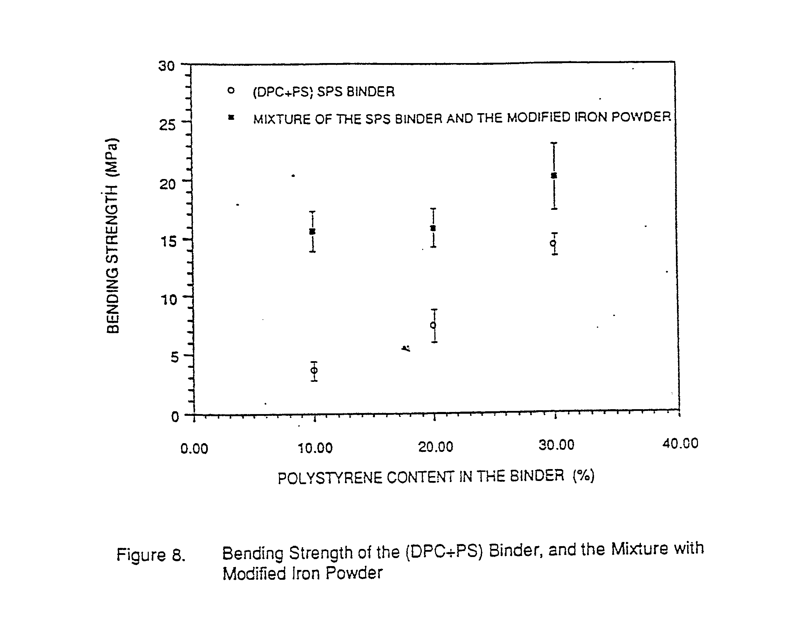

Figure 7 shows the bending strength of the (AC+PS) binder, and the mixture before and after debinding of the solid solvent component at three levels of PS content. The corresponding results for the (DPC+PS) binder are shown in Figure 8. The average values measured for about 8 samples are shown together with the standard deviations. The large amount of scatter in the data, especially with the mixtures, should be considered in the analysis of the results. The bending strengths of the SPS binders and the mixtures after debinding increase with increasing PS content as expected. However, the bending strengths of the mixture before solvent debinding appear to be generally insensitive to PS content.

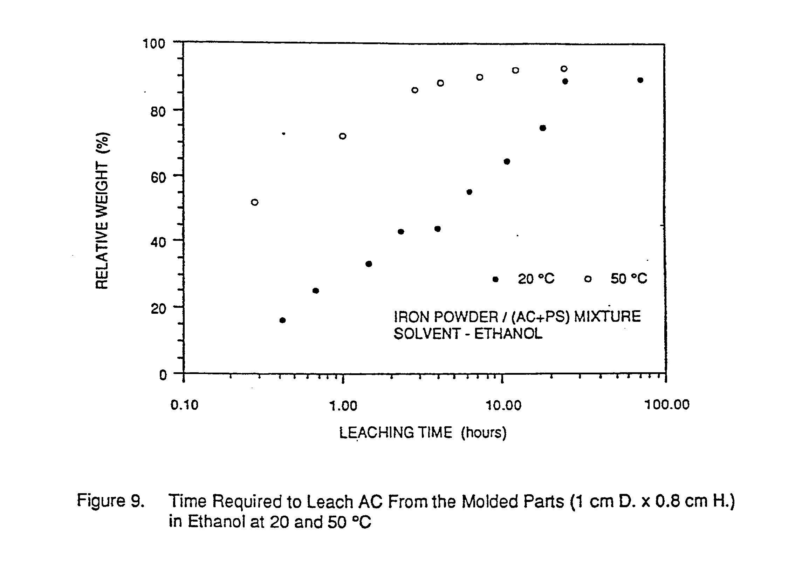

The results of the solvent debinding study for the disks molded of the mixture containing (80% AC + 20% PS) binder immersed in ethanol are presented in Figure 9. AC could be easily leached out of the disks using ethanol in a relatively short time without any distortion of the disks. It took only about two hours to leach out most of AC using ethanol at 50°C. The molded parts containing (80% ANP + 20% PS) could be easily debound in water without any distortion of the part shape. The molded parts containing (80% NAP + 20% PS) could be easily debound in a vacuum oven at about 50°C by sublimation.

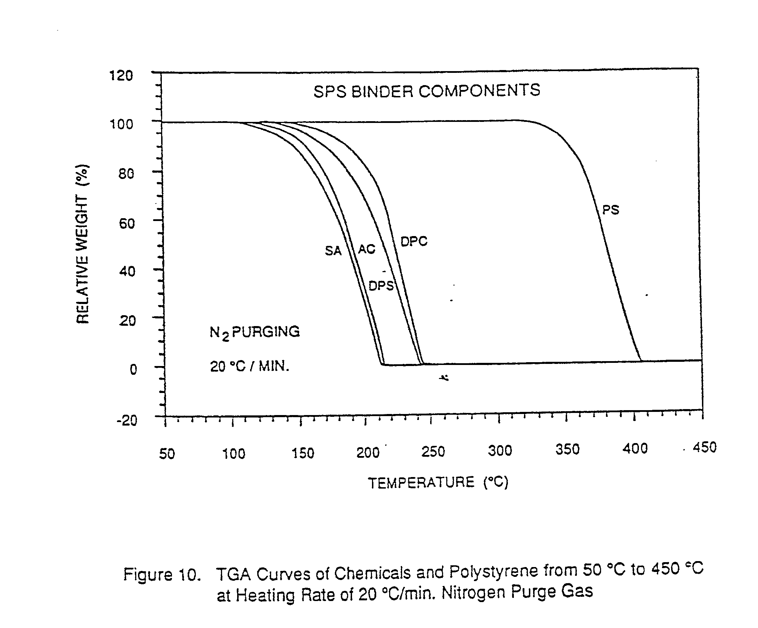

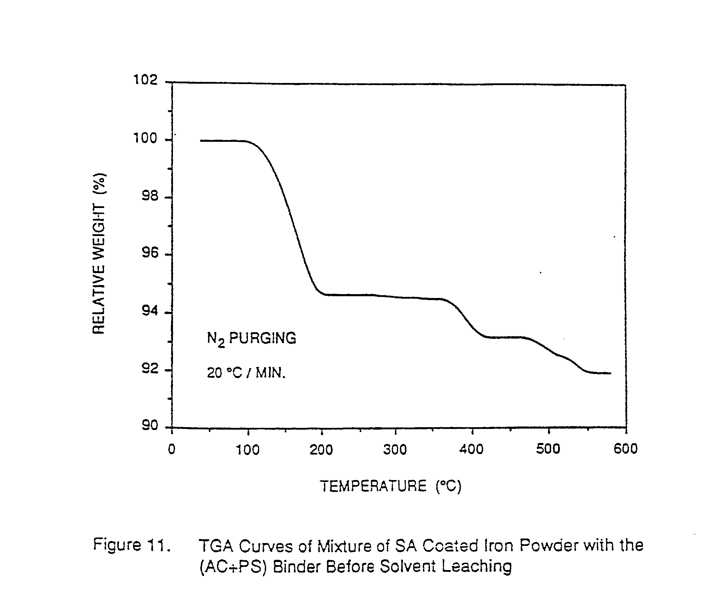

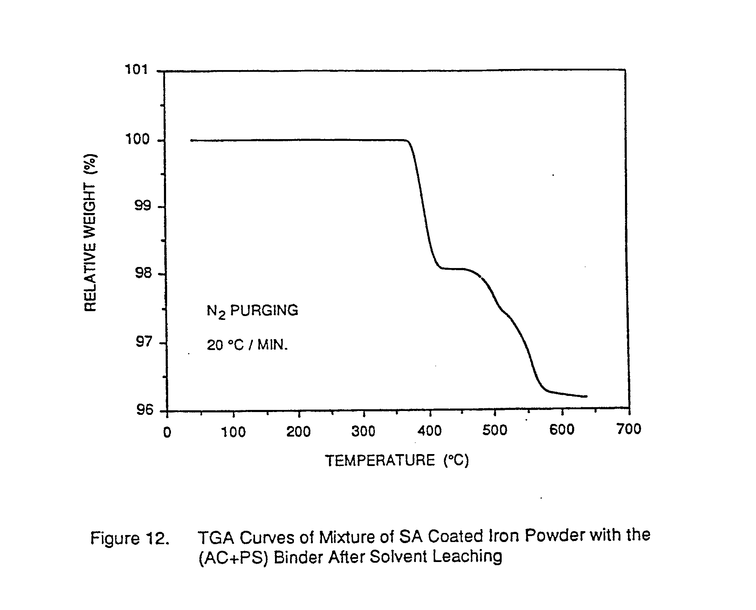

The TGA curves of all binder components except ANP and NAP; (PS, AC, SA, DPC, DPS), are shown in Figure 10. It is seen that all components undergo complete pyrolysis without leaving any residue. ANP and NAP also give complete pyrolysis. The TGA curves of the mixture made of (80% AC + 20% PS) binder, before and after leaching out AC in ethanol, are shown in Figures 11 and 12, respectively. Comparison of these figures clearly shows that AC was removed by ethanol but PS was left in the mixture. Referring to Figure 12, the PS fraction of the binder left in the mixture after solvent debinding can be removed in a furnace by pyrolysis at 370-400°C. The weight loss of about 1.5% of the mixture around 500°C was caused by the carbon content and other probable impurities in the iron powder.

## Claims

1. A binder for the sinter-processing of metallic or ceramic powder particles into shaped articles or parts, characterised in that it comprises a substantially homogeneous solid solution of a minor fraction of at least one high molecular weight polymer as solute in a major fraction of a low molecular weight solid chemical as solvent, the polymer and solvent being essentially mutually soluble when molten and solidifying when cooled from the molten state without substantial phase separation; the low molecular weight chemical showing selective solvent-solubility towards the polymer at a temperature below its own softening point or the softening point of the polymer, and/or the low molecular weight chemical having the capacity to undergo sublimation at a temperature below its own softening point or the softening point of the polymer.

2. A binder as claimed in Claim 1, characterised in that the polymer constitutes about 5-35% by wt.

of the combined weight of the polymer and low molecular weight chemical.

3. A binder as claimed in Claim or Claim 2, characterised in that the polystyrene or polyethylene vinyl acetate and low molecular weight chemical is acetanilide, diphenyl sulphone, diphenyl carbonate, antipyrine, rosin, or naphthalene.

4. A moulding composition for sinter-processing into solid shapes comprising a uniform mixture of about 40-70% by vol. of metallic or ceramic powder particles and about 30-60% by vol. of the binder of any preceding Claim.

5. A moulding composition as claimed in Claim 4, characterised by further including a small amount a coupling agent in an amount up to about 10-15% by wt. of the binder, to promote adhesion of the binder to the powder particles, the coupling agent preferably being coated on the surface of the particles.

6. A moulding composition as claimed in Claim 4 or Claim 5, characterised by further including of a plasticising agent in an amount up to about 40% by wt. of the binder to reduce the viscosity or to improve the flexibility of the binder.

7. A method of moulding shaped articles or parts from metallic or ceramic powder particles, characterised by the steps of: uniformly mixing the powder particles with a binder as claimed in any preceding Claim; shaping the mixture while the binder is in a fused state into a shaped article and allowing the binder to solidify in that shape; selectively and non-destructively essentially removing the low molecular weight chemical fraction from the article while the polymer fraction remains as a porous solid matrix holding the powder particles in the shape of the article; and subjecting the resultant porous article to a high temperature thermal treatment to remove initially the polymer by thermal decomposition and then to sinter the powder particles into a rigid article of a shape corresponding essentially to the initial shape of the mixture.

8. A method as claimed in Claim 7, characterised in that, after the selective removal of the selective removal of the low molecular weight chemical, the shaped part is subjected to a preliminary pyrolysis to remove the polymer fraction and is then subjected to a sintering heat treatment to sinter the powder particles.

9. A method as claimed in Claim 7 or Claim 8, characterised in that the initial mixture of binder and powder particles is shaped by injection moulding under sufficient pressure and heat to cause the mixture to undergo fluid flow to form the shaped part.

10. A method as claimed in any of Claims 7 to 9, characterised in that the low molecular weight chemical is selectively removed either by contacting the solid moulded shaped part, at a temperature below the softening point of either the low molecular weight chemical or the polymer, with a solvent for the said chemical solvent but which is substantially free of any solvent action on the polymer of the powder particles, or alternatively by sublimation at a temperature below the softening point of either the chemical or the polymer.

11. A method as claimed in any of Claims 7 to 11, characterised in that the low molecular weight chemical is selectively removed at a temperature below its softening temperature whereby the low molecular weight chemical remains mechanically rigid while undergoing its removal

Figure 1.    Viscosity of the (AC+PS) Binders at 130° C as a Function of
            Shear Rate at Five Levels of PS Content (0, 5, 10, 20, and 30
            % to the Weight of Binder)

Figure 2.   Relative Viscosity of the (AC+PS) Binders at 130° C

Figure 3. Viscosity of the (DPC+PS) Binders at 130° C as a Function of
Shear Rate at Five Levels of PS Content (0, 5, 10, 20 and 30 %
to the Weight of Binder)

Figure 4. Relative Viscosity of the (DPC+PS) Binders at 130° C

Figure 5. Viscosity of Three Different SPS Binders at 130° C

Figure 6. Viscosities of Three Mixtures Made of Iron Powder with AC / PS, DPS / PS and DPC / PS Binders at 130 °C

Figure 7.    Bending Strength of the (AC+PS) Binder, and the Mixture with Modified Iron Powder

Figure 8.    Bending Strength of the (DPC+PS) Binder, and the Mixture with Modified Iron Powder

Figure 9. Time Required to Leach AC From the Molded Parts (1 cm D. x 0.8 cm H.) in Ethanol at 20 and 50 °C

Figure 10. TGA Curves of Chemicals and Polystyrene from 50 °C to 450 °C at Heating Rate of 20 °C/min. Nitrogen Purge Gas

Figure 11.  TGA Curves of Mixture of SA Coated Iron Powder with the (AC+PS) Binder Before Solvent Leaching

Figure 12.    TGA Curves of Mixture of SA Coated Iron Powder with the (AC+PS) Binder After Solvent Leaching

EP 0 456 441 A1

| | European Patent Office | EUROPEAN SEARCH REPORT | Application Number |
|---|---|---|---|

EP    91 30 4071

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 643 954 (KENNAMETAL INC)<br>* claim 1 *<br>--- | 1-11 | B22F1/00<br>B22F3/10<br>C04B35/00 |
| X | US-A-3 859 405 (R.A.HORTON)<br>* column 3, line 18 - column 6, line 27; claim 1 *<br>--- | 1-11 | |
| A | US-A-4 898 902 (T.NAGAI ET AL)<br>* column 2, line 24 - line 62 *<br>--- | 1-11 | |
| A | EP-A-311 407 (RISI INDUSTRIES)<br>* claim 1 *<br>--- | 1-11 | |
| A | FR-A-2 488 880 (ASAHI GLASS CO)<br>* claim 1 *<br>--- | 1-11 | |
| A | EP-A-362 866 (SUMITOMO CEMENT CO)<br>* claims 1,8 *<br>----- | 1-11 | |
| | | | TECHNICAL FIELDS SEARCHED (Int. Cl.5)<br><br>B22F<br>C04B |

The present search report has been drawn up for all claims

| Place of search | Date of completion of the search | Examiner |
|---|---|---|
| THE HAGUE | 09 AUGUST 1991 | SCHRUERS H.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P0401)

20